# DEMANDE DE BREVET EUROPEEN

(11) **EP 1 245 143 A1**
(43) Date de publication de la demande: **02.10.2002**
(21) Numéro de dépôt: 01870066.6
(22) Date de dépôt: 28.03.2001
(51) Int. Cl.: A01G 1/04

(54) **Procédé et installation pour la culture de champignons avec une centrale de co-génération de chaleur et d'électricité**

(71) Demandeur: Gabellieri, Rodolfo, 1050 Bruxelles (BE)
(72) Inventeur: Gabellieri, Rodolfo, 1050 Bruxelles (BE)
(74) Mandataire: Van Malderen, Joelle

(57) **Abrégé**

La présente invention se rapporte à un procédé pour la culture de champignons sur une biomasse végétale dans une chambre de culture (4) climatisée, selon lequel on climatise la chambre de culture (4) au moyen de chaleur et d'électricité produites dans une centrale de cogénération dans laquelle on brûle la biomasse épuisée recueillie de la chambre de culture (4). La présente invention se rapporte également à l'utilisation dudit procédé pour la culture de champignons saprophytes et à une installation pour la mise en oevre dudit procédé.

## Description

### Objet de l'invention

La présente invention se rapporte à la culture artificielle des champignons. Elle concerne plus particulièrement un procédé pour la culture de champignons saprophytes sur un substrat nutritif naturel qui est appelé «compost» et est obtenu par décomposition microbienne d'une biomasse végétale.

### Etat de la technique

La culture de champignons sur un substrat nutritif naturel appelé «compost» et obtenu par décomposition microbienne d'une biomasse végétale, est couramment utilisée pour la production de diverses variétés de champignons comestibles, spécialement pour la production des champignons de Paris et des pleurotes.

Ce type de culture artificielle des champignons sur biomasse implique le respect de conditions strictes en ce qui concerne la température et le degré hygrométrique de l'air ambiant. Pour garantir ces conditions climatiques aux moindres frais, on réalise souvent la culture des champignons dans des grottes ménagées dans des terrains calcaires. Le choix de telles grottes est toutefois limité, étant donné qu'il est nécessaire d'y trouver les conditions requises de température et d'humidité. La culture en grotte présente en outre le désavantage de localiser la production des champignons dans des zones géographiques définies, qui ne sont pas nécessairement idéales.

Pour permettre une délocalisation de la culture des champignons, on a réalisé celle-ci dans des chambres climatisées artificiellement. La climatisation des chambres de culture s'accompagne toutefois d'une consommation importante d'énergie, ce qui grève le coût de la culture et handicape sa compétitivité.

Une difficulté supplémentaire rencontrée dans la culture des champignons sur biomasse réside dans l'évacuation de la biomasse épuisée. Celle-ci trouve parfois une utilisation en tant qu'engrais, notamment en culture florale. Toutefois, la biomasse épuisée est généralement contaminée par des spores et des parasites nuisibles ou pathogènes, de sorte qu'il est nécessaire de la soumettre à un traitement d'épuration avant de l'utiliser comme engrais.

### Buts de l'invention

La présente invention vise à remédier aux inconvénients précités, en fournissant un procédé nouveau de culture artificielle de champignons sur biomasse, qui peut être effectué de manière économique dans des chambres climatisées artificiellement et qui résout en outre les problèmes liés à l'évacuation de la biomasse épuisée.

### Résumé de l'invention

La présente invention se rapporte à un procédé pour la culture de champignons sur un compost dans des chambres de culture climatisées, ledit compost étant utilisé comme substrat nutritif et résultant de la transformation d'une biomasse végétale, caractérisé en ce qu'il utilise comme source d'énergie l'énergie fournie par une centrale de co-génération de chaleur et d'électricité.

De préférence, la centrale de co-génération de chaleur et d'électricité est alimentée par un combustible comprenant au moins en partie le compost épuisé et recyclé après avoir servi comme substrat nutritif. Cette utilisation du compost épuisé comme combustible nécessite de préférence sa réduction/transformation sous forme de « pellets ».

De préférence, le combustible pour alimenter la centrale de co-génération de chaleur et d'électricité comprend également une quantité de biomasse vierge transformée en « pellets ». On entend par « biomasse vierge», une biomasse végétale non encore utilisée.

De préférence, la biomasse est sélectionnée parmi le groupe constitué par de la paille, des copeaux de bois, des écorces de bois et des rafles de maïs.

Il est à noter que la transformation en « pellets » du compost épuisé et de la biomasse vierge, encore appelée « pelletisation », est souhaitable pour différentes raisons. Une première raison est que cette « pelletisation » permet d'assurer la régularité de fonctionnement des dispositifs d'alimentation de la centrale. Une deuxième raison est qu'elle permet d'utiliser en tant que combustibles d'autres biomasses parfois disponibles et bon marché telles que le marc d'olives, de la sciure, des résidus de fruits secs ou autres déchets liés.

Les centrales de co-génération d'électricité et de chaleur sont bien connues en technique. De manière générale, elles comprennent, d'une part, un moteur thermique «primaire» couplé à un alternateur et, d'autre part, un échangeur de chaleur destiné à transférer la chaleur résiduelle du moteur thermique à un fluide caloporteur. Dans le procédé selon l'invention, si l'énergie électrique générée par l'alternateur et les calories du fluide caloporteur servent à la climatisation des chambres de culture, elles offrent également l'avantage de rendre l'usine indépendante des réseaux de distribution énergétique en satisfaisant en autarcie tous les besoins électriques et thermiques.

Dans une première forme préférée d'exécution de la présente invention, la centrale de co-génération comprend une chaudière pour la production de vapeur et une turbine à vapeur.

Plus précisément, dans cette première forme d'exécution, la centrale de co-génération utilise, comme «moteur primaire» une turbine à vapeur couplée à un alternateur et actionnée par la vapeur produite au moyen d'une chaudière alimentée par le compost épuisé et, en complément, par la même biomasse vierge que celle utilisée pour préparer le compost. La vapeur produite par la chaudière est utilisée en premier lieu pour entraîner la turbine couplée à l'alternateur. La vapeur détendue sortant de la turbine est ensuite utilisée pour les besoins thermiques de l'usine, y compris son emploi comme fluide caloporteur pour le conditionnement des chambres de culture.

Dans une seconde forme préférée d'exécution de la présente invention, la centrale de co-génération comprend une turbine à gaz et une chaudière utilisant les gaz d'échappement de la turbine.

Plus précisément, dans cette seconde forme d'exécution, le compost épuisé recueilli à la sortie des chambres de culture est mélangé avec le complément nécessaire de biomasse vierge, pour être ensuite conditionné sous forme de «pellets» et gazéifié dans un gazogène. Le gaz produit après refroidissement et épuration, sert à alimenter une turbine à gaz couplée à un alternateur. Les gaz de combustion chauds sortant de la turbine sont utilisés pour produire de la vapeur dans une chaudière. La vapeur ainsi produite peut être utilisée telle quelle pour les besoins thermiques de l'usine comme dit au cas précédent. La chaleur résiduaire qui résulte du refroidissement des gaz sortants du gazogène peut être utilisée pour sécher le compost épuisé avant sa "pelletisation".

Dans une forme de réalisation supplémentaire de l'invention, la centrale de co-génération comprend un moteur à combustion interne, du type à pistons, couplé à un alternateur, ledit moteur étant équipé d'un circuit d'eau de refroidissement. Dans cette forme de réalisation de l'invention, on gazéifie le compost épuisé de la même façon que prévu dans le cas d'utilisation d'une turbine à gaz et, après refroidissement et épuration du gaz, celui-ci est utilisé pur actionner le moteur à combustion interne. L'eau chaude ayant servi au refroidissement du moteur sert de fluide caloporteur pour le conditionnement des chambres de culture.

On notera que si les différentes étapes du procédé selon la présente invention permettant la culture de champignons sont avantageusement réalisées dans des chambres artificielles climatisées, elles peuvent également être réalisées dans une cavité naturelle du sol telle qu'une grotte. Il est néanmoins plus avantageux d'utiliser des chambres artificielles, par exemple en maçonnerie, ces chambres étant de préférence calorifugées.

En variante, on peut également utiliser des chambres naturelles ou creusées artificiellement dans le sol ou dans un massif montagneux.

Il importe également de souligner que, dans le procédé selon l'invention, la climatisation des chambres de culture implique d'y réaliser des conditions définies de température et d'humidité. Conformément à l'invention, ces conditions climatiques sont obtenues au moyen d'un apport d'énergie électrique et d'énergie calorifique, toutes les deux produites dans une centrale de co-génération de chaleur et d'électricité. Ladite centrale utilise, comme combustibles, le compost épuisé sortant de la champignonnière et, en complément, la même biomasse végétale vierge que celle que l'on utilise pour préparer le compost susdit.

La présente invention se rapporte également à l'utilisation dudit procédé, pour la culture de champignons saprophytes sélectionnés parmi les agaricacées, les pleurotes, les strophaires et les volvaires.

En particulier, la présente invention se rapporte à l'utilisation dudit procédé pour la culture de champignons de Paris.

Un autre objet de la présente invention est une installation pour la culture de champignons, comprenant des chambres de culture climatisées, caractérisée en ce que le dispositif de climatisation des chambres de culture comprend une centrale pour la co-génération de chaleur et d'électricité.

Selon une première forme préférée d'exécution, ladite centrale de co-génération comprend en série une chaudière et une turbine à vapeur couplée à un alternateur.

Selon une seconde forme préférée d'exécution, ladite centrale de co-génération comprend, en série, une turbine à gaz couplée à un alternateur et une chaudière pour la production de vapeur en utilisant les gaz chauds sortant de la turbine.

### Brève description des figures

La figure 1 représente un schéma de l'installation en co-génération nécessaire à la mise en oeuvre du procédé pour la culture artificielle de champignons sur un compost d'origine végétale, selon une première forme d'exécution préférée de la présente invention.

La figure 2 représente un schéma de l'installation en co-génération nécessaire à la mise en oeuvre du procédé pour la culture artificielle de champignons sur un compost d'origine végétale, selon une seconde forme d'exécution préférée de la présente invention.

### Description de formes d'exécution préférées de l'invention

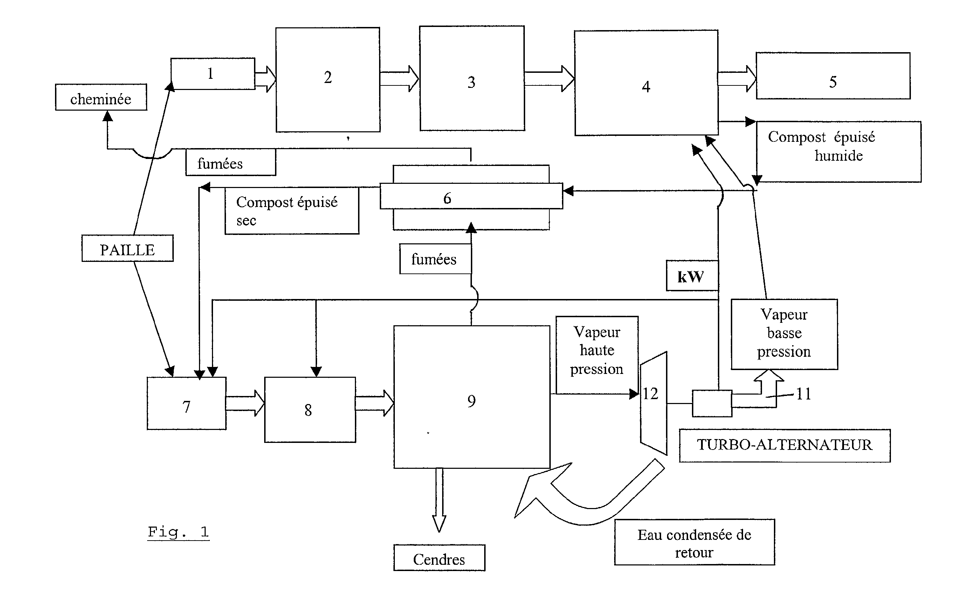

Selon une première forme préférée d'exécution, l'installation pour la mise en oeuvre du procédé de l'invention est telle que représentée à la figure 1. Cette installation comprend une champignonnière structurée en trois secteurs. La paille vierge destinée à la préparation du compost est d'abord introduite dans le moulin 1 où elle est déchiquetée avant d'être transférée au premier secteur de la champignonnière proprement dite: la préparation du compost 2. Dans le secteur 3 se fait ensuite l'ensemencement, la colonisation et le mûrissage du compost, ledit compost passant enfin dans les chambres de production et récolte 4. Le produit fini (les champignons) quitte les chambres de récolte vers les magasins d'emballage et d'expédition 5. Le compost épuisé est d'abord séché dans un séchoir tournant 6 et passe ensuite à un moulin 7 dans lequel il est déchiqueté puis il est mélangé avec de la paille vierge supplémentaire avant d'être mis sous forme de « pellets » dans le "pelletizer" 8 et d'alimenter, ainsi conditionné, la chaudière 9. Les fumées chaudes de cette chaudière sont utilisées pour chauffer le séchoir 6 alors que la vapeur haute pression produite par la chaudière actionne la turbine à vapeur 10 couplée avec l'alternateur 11. La vapeur basse pression quittant l'alternateur est utilisées pour tous le besoins thermiques de l'usine et les eaux de condensation sont recyclés à la chaudière. L'énergie électrique produite sert à l'alimentation électrique de toute la champignonnière et de ses services, y compris l'éclairage et la climatisation des chambres de mûrissage et de récolte.

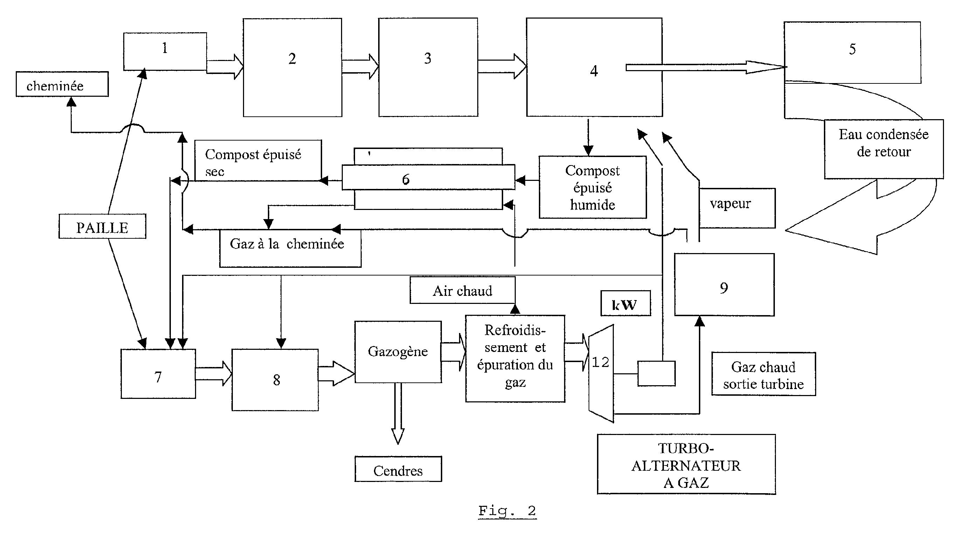

Selon une seconde forme préférée d'exécution, l'installation pour la mise en oeuvre du procédé de l'invention est telle que représentée à la figure 2. Cette installation diffère de celle de la figure 1 en ce qu'elle utilise une turbine à gaz alimentée avec le gaz obtenu en convertissant en gaz - au moyen d'un gazogène - la biomasse combustible "pelletisée". Cet aménagement alternatif convient pour des champignonnières de plus grande capacité. La chaudière 9 ici est petite et, chauffée par les gaz chauds sortant de la turbine à gaz 12, produit seulement de la vapeur basse pression. Comme il a déjà été précédemment décrit, cette turbine est alimentée avec le gaz obtenu en gazéifiant dans un gazogène le combustible "pelletisé" et en refroidissant (et épurant) le gaz ainsi produit: le séchoir 6 peut ainsi être chauffé en utilisant la chaleur disponible à la sortie du gazogène.

Il est à noter que l'étape de transformation de la biomasse végétale en compost en vue d'utiliser ledit compost dans le procédé selon l'invention, peut être une étape intégrée audit procédé comme décrit dans le cas des figures 1 et 2, mais elle peut également être réalisée en dehors dudit procédé.

L'exemple suivant fera apparaître l'intérêt économique de l'invention.

On considère une installation conforme à celle schématisée à la figure 1, pour une production annuelle de 5000 t/an de champignons de Paris. Son exploitation nécessite un apport de 1800 kg/h de paille (à l'état sec) pour former le compost utilisé pour la culture dont le résidu sera d'environ 900 kg/h de compost épuisé. La puissance électrique de l'installation est de 1000 kW, ce qui nécessite une consommation horaire de 2000 kg de biomasse combustible. Tous les besoins en énergie et de l'installation sont ainsi assurés au moyen du compost épuisé (900 kg/h) et d'un apport complémentaire de 1100 kg/h de paille vierge.

Par comparaison avec une installation antérieure à l'invention, sans centrale de co-génération, l'installation -selon l'invention réalise ainsi (en récupérant le compost épuisé) une économie «pondérale» de 45 % de combustible. De plus, la paille est une biomasse largement disponible qui, à égalité d'apport énergétique (3 kg de paille sèche sont l'équivalent de 1 kg de fuel-oil), est beaucoup plus bon marché que les combustibles classiques.

L'exemple cité ci-dessus se rapporte à la culture de champignons de Paris, pour laquelle il faut environ 3 kg de compost pour produire 1 kg de champignons. L'invention est encore beaucoup plus avantageuse pour la culture des pleurotes dans laquelle il faut 6 à 10 kg de compost pour produire 1 kg de champignons : dans ce cas, l'utilisation du seul compost épuisé comme combustible est parfois suffisante pour l'alimentation de la centrale, et il n'y a pas lieu d'ajouter des quantités complémentaires de paille ou d'autres biomasses.

## Revendications

1. Procédé pour la culture de champignons sur un compost dans des chambres de culture climatisées, ledit compost étant utilisé comme substrat nutritif et résultant de la transformation d'une biomasse végétale vierge, **caractérisé en ce qu'**il utilise comme source d'énergie une centrale de co-génération de chaleur et d'électricité.

2. Procédé selon la revendication 1, **caractérisé en ce que** la centrale de co-génération de chaleur et d'électricité est alimentée par un combustible comprenant au moins en partie le compost épuisé et recyclé après avoir préalablement servi comme substrat nutritif.

3. Procédé selon la revendication 2, **caractérisé en ce que** le combustible pour alimenter la centrale de co-génération de chaleur et d'électricité comprend également une quantité complémentaire de la même biomasse vierge utilisée pour la préparation du compost.

4. Procédé selon l'une quelconque des revendications précédentes, **caractérisé en ce que** la biomasse est sélectionnée parmi le groupe constitué par paille, les copeaux de bois, les écorces de bois et les rafles de maïs.

5. Procédé selon l'une des revendications précédentes, **caractérisé en ce que** la centrale de co-génération comprend une chaudière (9) pour la production de vapeur et une turbine à vapeur (10).

6. Procédé selon l'une des revendications 1 à 4, **caractérisé en ce que** la centrale de co-génération comprend une turbine à gaz (12) et une chaudière (9) utilisant les gaz d'échappement de la turbine.

7. Utilisation du procédé selon l'une quelconque des revendications précédentes, pour la culture de champignons saprophytes sélectionnés parmi les agaricacées, les pleurotes, les strophaires et les volvaires.

8. Utilisation selon la revendication 7, pour la culture de champignons de Paris.

9. Installation pour la culture de champignons, comprenant des chambres de culture climatisées, **caractérisée en ce que** le dispositif de climatisation des chambres de culture comprend une centrale pour la co-génération de chaleur et d'électricité.

10. Installation selon la revendication 9, **caractérisée en ce que** la centrale de co-génération comprend, en série, une turbine à gaz (12) couplée à un alternateur et une chaudière (9) pour la production de vapeur en utilisant les gaz chaud sortant de la turbine.

11. Installation selon la revendication 9, **caractérisée en ce que** la centrale de co-génération comprend en série une chaudière (9) et une turbine à vapeur (10) couplée à un alternateur.

12. Installation selon la revendication 9, **caractérisée en ce que** la centrale de co-génération comprend un moteur à combustion interne, du type moteur à pistons, couplé à un alternateur, ledit moteur étant équipé d'un circuit d'eau de refroidissement.
